# EUROPEAN PATENT SPECIFICATION

(11) **EP 2 140 786 B1**
(45) Date of publication and mention of the grant of the patent: **27.07.2011**
(21) Application number: 08163348.9
(22) Date of filing: 29.08.2008
(51) Int. Cl.: A47J 27/00

(54) **Cooking utensil with removable and/or exchangeable bottom**
Kochutensil mit abnehmbarem und/oder auswechelbarem Boden
Ustensile de cuisson avec fond détachable et/ou échangeable

(30) Priority: 01.07.2008 EP 08159414
(43) Date of publication of application: 06.01.2010
(73) Proprietor: ICB N.V., 2431 Veerle-Laakdal (BE)
(72) Inventor: Bergen, Johan, 3271, Averbode (BE)
(74) Representative: Bird, William Edward

(56) References cited:
- BE-A1- 820 962
- JP-A- 2005 087 526

## Description

### Technical field of the invention

The present invention relates to cooking utensils, such as e.g. cooking pots or pans. More particularly, the present invention relates to cooking utensils with a removable and/or exchangeable bottom, and to a method for manufacturing such cooking utensils.

### Background of the invention

BE-A-820962 describes a culinary utensil or pan having a screw in self sealing base, renewable when worn or interchangeable for change of use e.g. frying to boiling or grilling, and can be plain or coated with non-stick material. The normal hollow cylinder type vessel (12) with two handles may be used or a low sided frying pan may be used. The monolithic disc (13) closing the base is screw detachable, and may be relatively thick. It is horizontally flanged at the top (18) and has diametrically projecting lugs (19) which engage in horizontal circular slots in the pan body: vertical diametrically aligned slots connect and permit access to these slots. Fixing of the base is achieved by sequential depression and rotation. The seal resists high temperature.

During cooking in cooking utensils such as frying pans or cooking pots, food can stick to a cooking surface of the cooking utensils.

One way to prevent sticking of food to the cooking surface during cooking is by providing at least the cooking surface of the cooking utensil with an anti-stick coating. Most often, such an anti-stick coating may be a PTFE (=polytetrafluoroethylene) coating, also known as Teflon^{®} coating. Examples of cooking utensils having a PTFE anti-stick coating are described in amongst other EP 0 424 072, EP 0 568 322 and EP 0 786 290. The anti-stick coating may be applied to the cooking surface in different ways. For example, the anti-stick coating may be applied by spraying the anti-stick material onto the cooking surface. Interlayers may be provided in between the anti-stick coating and the cooking surface for improving adherence of the anti-stick coating to the cooking surface.

A disadvantage of such anti-stick coatings is that, after repeatedly being used, the anti-stick coating may be damaged. Consequently, the anti-stick effect may at least partly disappear. As a result, more fat e.g. butter or oil, has to be used for preventing the food from sticking to the cooking surface. The damaged anti-stick coatings cannot be easily repaired. Consequently, although only the anti-stick coating may be damaged and the major part of the cooking utensil is still good enough for use, the complete cooking utensil has to be replaced. This may lead to high costs. Furthermore, the high degree of wear of such cooking utensils and the corresponding need for replacement of such cooking utensils puts a large burden on the environment.

Another way of preventing food from sticking to the cooking surface of a cooking utensil is by providing a baking sheet onto the cooking surface. This baking sheet may be made of a heat resistant material such as, for example, glassine paper, parchment paper, nitrate paper, aramid paper or the like (see e.g. JP 2005087526), or a PTFE coated glass fiber foil. However, a disadvantage of providing a cooking sheet is that, during cooking, this sheet may be displaced, thereby exposing part of the cooking surface to which the food can stick. Hence, the use of such cooking sheets may cause inconvenience during cooking as well as

### Summary of the invention

It is an object of embodiments of the present invention to provide good cooking utensils, components thereof and/or methods for forming such cooking utensils.

It is an advantage of embodiments according to the present invention that systems and methods are provided resulting a smaller burden on the environment, for example wherein the amount of recycling for recycling damaged cooking utensils is reduced.

An advantage of a cooking utensil according to embodiments of the invention is that when the cooking surface of the cooking utensil is damaged, e.g. scratched, the cooking surface can be removed and replaced by a new cooking surface without the need to completely replace the cooking utensil. This significantly decreases financial and environmental costs with respect to prior art cooking utensils where the complete cooking utensil has to be replaced when the cooking surface is damaged, e.g. scratched. It is an advantage of embodiments according to the present invention that the amount of material to be recycled, when the cooking surface is damaged, may be substantially reduced, as only part of the cooking utensil needs to be replaced. It thus is an advantage of embodiments according to the present invention that a substantial part of the cooking utensil can still be used.

It is an advantage of embodiments according to the present invention to provide a cooking utensil for which the type of cooking surface or bottom used may be selected, resulting in a multifunctional cooking utensil.

Another advantage of a cooking utensil according to embodiments of the invention is that in the same cooking utensil different types of bottoms can be used, e.g. a grill bottom or a flat bottom.

The above objective is accomplished by a method and device according to the present invention.

In a first aspect, the present invention provides a cooking utensil comprising:
- a frame (1) having a base (2) with a recess (3), e.g. cut-away or opening, adapted for receiving a removable and/or exchangeable bottom (4) adapted for closing the recess (3) in the base (2), the removable and/or exchangeable bottom (4) having a cooking surface (7), and
- fixing means for removably fixing the removable and/or exchangeable bottom (4) to the base (2) of the frame (1), characterised by: a baking sheet having edges stuck in between the base (2) of the frame (1) and the removable and/or exchangeable bottom (4), the baking sheet thereby covering the cooking surface (7) of the removable and/or exchangeable bottom (4). The frame preferably surrounds the bottom when the latter is place, the frame having no split, or hinge in one side. The frame is preferably made of a rigid material, e.g. comprises at least in part metal, and frame should be preferably rigid. The bottom may also be made at least partly of metal, e.g. from metal plate. Typical metals are aluminium, copper, and steel and mixtures of these.

With the removable and/or exchangeable bottom being rigid is meant that the removable and/or exchangeable bottom is stiff, or in other words that the removable and/or exchangeable bottom is substantially not flexible, e.g. it may be made at least partly of metal plate

According to embodiments of the invention, the recess may be formed such that it extends only part into the base, i.e. it does not extend all the way through the base. In that case, the recess may also be referred to as cut-away. According to other embodiments, the recess may be formed such that it extends all the way through the base. In that case, the recess may also be referred to as opening in the base.

An advantage of a cooking utensil according to embodiments of the invention is that when the cooking surface of the cooking utensil, e.g. pan or cooking pot is damaged, e.g. scratched, the removable and/or exchangeable bottom can be removed and replaced by a new removable and/or exchangeable bottom with an undamaged cooking surface. This significantly decreases costs with respect to prior art cooking utensils where the complete cooking utensil has to be replaced when the cooking surface is damaged, e.g. scratched.

Another advantage of a cooking utensil according to embodiments of the invention is that in the same cooking utensil different types of removable and/or exchangeable bottoms can be used, e.g. a grill bottom or a flat bottom.

According to embodiments of the invention, the fixing means may comprise a clamping means for clamping the frame to the removable and/or exchangeable bottom.

According to other embodiments, the fixing means may comprise a first portion on the frame, wherein the first portion is adapted for co-operating with a second portion on the removable and/or exchangeable bottom so as to provide a removable fixation between the removable and/or exchangeable bottom and the frame.

According to embodiments of the invention, the removable and/or exchangeable bottom may have the form of a disc.

According to embodiments of the invention, the removable and/or exchangeable bottom may have a bulge and the frame may be adapted for receiving the bulge of the removable and/or exchangeable bottom so as to close the recess in the base.

The cooking utensil according to the invention comprises a baking sheet having edges stuck in between the base of the frame and a removable and/or exchangeable bottom so as to cover a cooking surface of the removable and/or exchangeable bottom.

An advantage hereof is that because the baking sheet is fixed, it is prevented from moving during cooking, which increases comfort of the cooking utensil, e.g. pan or cooking pot.

The removable and/or exchangeable bottom may have a cooking surface and the cooking surface of the removable and/or exchangeable bottom may comprise an anti-stick coating.

An advantage hereof is that when the anti-stick coating is damaged, the removable and/or exchangeable bottom may be removed from the cooking utensil, e.g. pan or cooking pot and may replaced by a new removable and/or exchangeable bottom with an undamaged anti-stick coating. This significantly reduces costs when compared to prior art cooking utensils, where the complete cooking utensil has to be replaced when the anti-stick coating on the cooking surface is damaged.

The frame may have an inner side and an outer side and an anti-stick coating may be provided onto the inner side and/or the outer side of the frame.

According to embodiments of the invention, the cooking utensil may be a pan e.g. a frying pan, a grill pan, a wok pan, a sauce pan or an omelet pan, the frame forming the outer wall or side of the utensil in an uninterrupted, integral manner.

According to other embodiments, the cooking utensil may be a cooking pot e.g. a casserole or pressure-cooker.

According to embodiments of the invention, the removable and/or exchangeable bottom and the frame may be formed of a same material.

According to other embodiments of the invention, the removable and/or exchangeable bottom and the frame may be formed of a different material.

The present invention also provides the use of a cooking utensil according to embodiments of the invention for cooking food.

In another aspect, the present invention provides a method for manufacturing a cooking utensil (10). The method comprises:
- providing a frame (1) having a base (2) with a recess (3),
- providing a removable and/or exchangeable bottom (4) adapted for closing the recess (3) in the base (2), and
- removably fixing the removable and/or exchangeable bottom (4) to the frame (1) by means of fixing means, characterised by: fixing a baking sheet having edges stuck in between the base (2) of the frame (1) and the removable and/or exchangeable bottom (4), the baking sheet thereby covering the cooking surface (7) of the removable and/or exchangeable bottom (4). The frame may be rigid as described above, e.g. may surround in an integral, uninterrupted manner the bottom.

Removably fixing the removable and/or exchangeable bottom may comprise fitting a portion of the removable and/or exchangeable bottom in the recess of the base.

The removable and/or exchangeable bottom may have a cooking surface and the method may furthermore comprise, before providing the removable and/or exchangeable bottom, providing an anti-stick coating to the cooking surface of the removable and/or exchangeable bottom.

An advantage hereof is that when the anti-stick coating is damaged, the removable and/or exchangeable bottom may be removed from the cooking utensil, e.g. pan or cooking pot and may replaced by a new removable and/or exchangeable bottom with an undamaged anti-stick coating. This significantly reduces costs when compared to prior art cooking utensils, where the complete cooking utensil has to be replaced when the anti-stick coating on the cooking surface is damaged.

The removable and/or exchangeable bottom has a cooking surface and the method furthermore comprises fixing a baking sheet in between the base of the frame and the removable and/or exchangeable bottom, the baking sheet thereby covering the cooking surface of the removable and/or exchangeable bottom.

An advantage hereof is that because the baking sheet is fixed, it is prevented from moving during cooking, which increases comfort of the cooking utensil, e.g. pan or cooking pot.

The present invention also provides a cooking utensil made by a method according to embodiments of the invention.

Particular and preferred aspects of the invention are set out in the accompanying independent and dependent claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 and Fig. 2 show cross-sections of a cooking utensil according to an embodiment of the present invention.
Fig. 3 to Fig. 5 show a cooking utensil according to an embodiment of the present invention.
Fig. 6 shows a cooking utensil according to an embodiment of the present invention.
Fig. 7 shows a cooking utensil according to an embodiment of the present invention.
Fig. 8 shows a cooking utensil according to an embodiment of the present invention.
Fig. 9 and Fig. 10 show an implementation of a fixing means according to an embodiment of the present invention.
Fig. 11 and Fig. 12 show an implementation of a fixing means according to an embodiment of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect the present invention provides a cooking utensil. In embodiments of the present invention, with cooking utensil is meant any device that can be used for preparing, e.g. cooking food in. Examples of such devices may be pans such as e.g. frying pans, grill pans, wok pans, sauce pans or omelet pans, or cooking pots such as e.g. casseroles or pressure-cookers which can be used on or in any kind of furnace, oven or any other suitable heating source known by a person skilled in the art.

The cooking utensil comprises a frame having a base with a recess, e.g. a cut-away or opening, adapted for receiving a removable and/or exchangeable bottom for closing the recess in the base, the removable and/or exchangeable bottom being rigid, and fixing means for removably fixing the removable and/or exchangeable bottom to the base of the frame. The removable and/or exchangeable bottom also may be part of the cooking utensil. With the removable and/or exchangeable bottom being rigid is meant that the removable and/or exchangeable bottom is stiff, or in other words that the removable and/or exchangeable bottom is substantially not flexible.

The frame forms an integral, uninterrupted rigid surround for the bottom, i.e. the frame does not include a hinge or interruption or split in one side.

Hereinafter, the cooking utensil according to embodiments of the invention will be described by means of particular examples and drawings. It has to be understood that these are only for the ease of explanation and that they are not intended to limit the invention in any way.

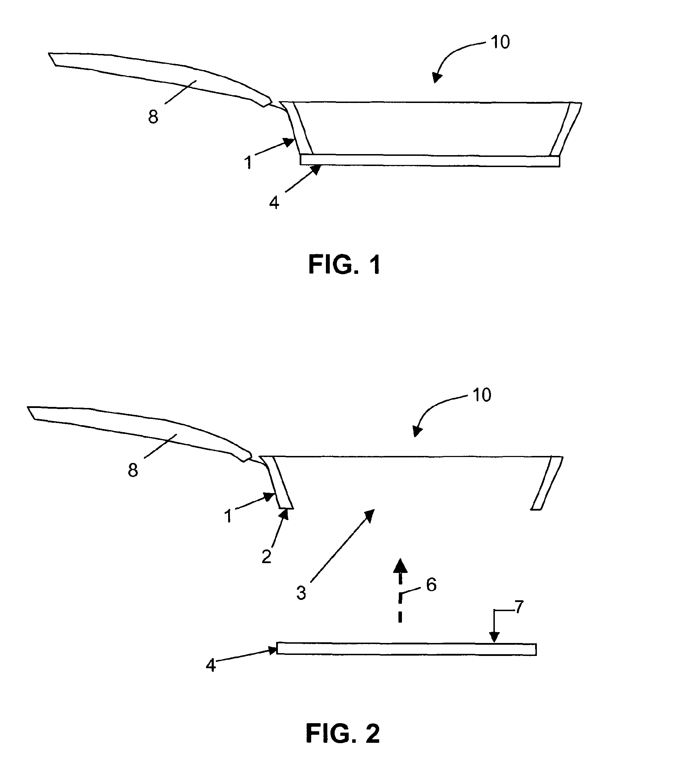

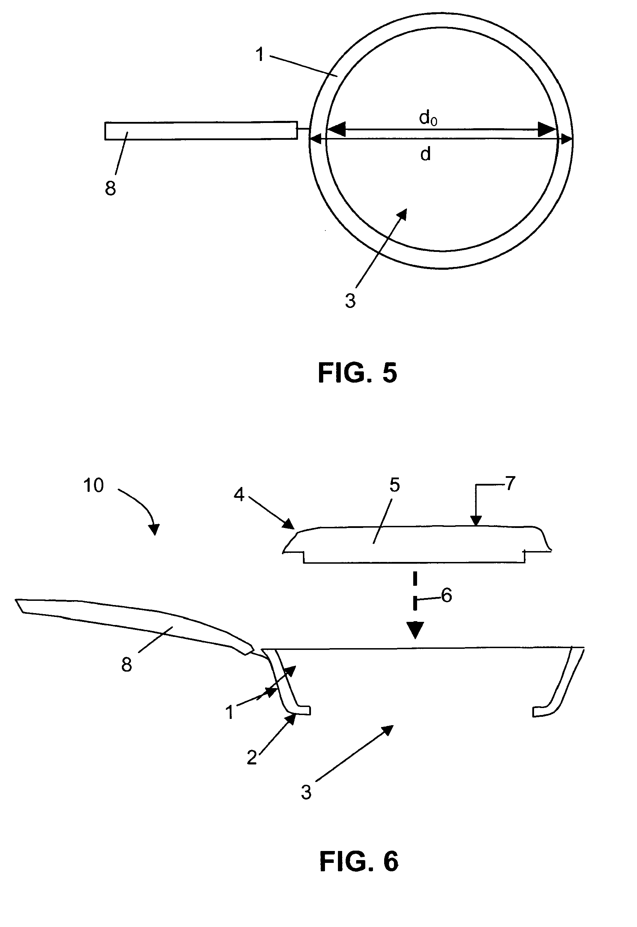

Fig. 1 to Fig. 6 show cooking utensils 10 according to different embodiments of the invention. More particular, Fig. 1 to Fig. 6 show a pan 10 according to different embodiments of the present invention. The pan may, for example, be a frying pan, a grill pan, a wok pan, a sauce pan or an omelet pan. Fig. 1 to Fig. 4 and Fig. 6 show cross-sections of the pan 10 according to embodiments of the invention while Fig. 5 shows a top view of the pan 10 according to embodiments of the invention.

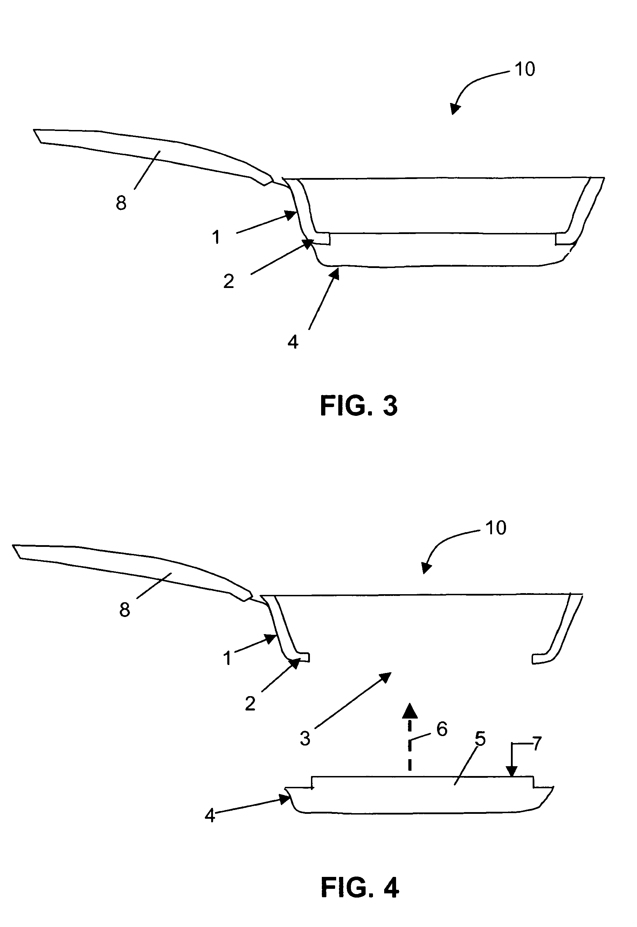

The cooking utensil, e.g. pan 10 comprises a frame 1, also referred to as body of the pan 10, or in general body of the cooking utensil 10. The frame or body 1 of the cooking utensil, e.g. pan 10, may be made out of any suitable material known by a person skilled in the art, such as for example but not limited to inox, aluminium, copper, cast iron. The frame forms an integral, uninterrupted rigid surround for the bottom, i.e. the frame does not include a hinge or interruption or split in one side. The frame or body 1 comprises a base 2 (see Fig. 2 and Fig. 4). The outer edge of the base 2 may have a circular shape or an oval shape or may have any other shape suitable for a cooking utensil, in the example given suitable for a pan 10. Such a shape may for example also be a rounded square. In the examples given in Fig. 1 to Fig. 5 the base 2 may have a circular shape (see Fig. 3). The base 2 may have any suitable size, in the example given diameter d, depending on the kind and size of the cooking utensil, e.g. pan 10. The base 2 is provided with a recess 3. According to embodiments of the invention, the recess 3 may be formed such that it extends only part into the base 2, i.e. it does not extend all the way through the base 2. In that case, the recess 3 may also be referred to as cut-away. According to other embodiments, the recess 3 may be formed such that it extends all the way through the base 2. In that case, the recess 3 may also be referred to as opening in the base 2. In the examples given in Fig. 1 to 5, the recess 3 extends all the way through the base 2. Therefore, in the further description with respect to Fig. 1 to 5, the recess 3 will be referred to as opening. According to embodiments of the invention, the opening 3 may have a same shape as the base 2. For example, when the base 2 has a circular shape, the opening 3 may also have a circular shape, as illustrated in Fig. 3. However, according to other embodiments of the invention, the opening 3 may have a shape different from the shape of the base 2. For example but not limiting, the base 2 may have an oval shape while the opening 3 in the base 2 has a circular shape. The opening 3 may have a size, in the example given diameter do, which is smaller than a characteristic size, e.g. diameter, of the base 2.

The pan 10 furthermore comprises a removable and/or exchangeable bottom 4 adapted for closing the opening 3, or in general the recess, of the base 2. Alternatively, the pan 10 may be adapted for receiving such a removable and/or exchangeable bottom 4 for closing the opening 3 of the base. Such a removable and/or exchangeable bottom 4 may be formed of any suitable material known by a person skilled in the art, such as for example but not limited to inox, aluminium, copper, cast iron. According to embodiments of the invention, the material the removable and/or exchangeable bottom 4 is formed of may be the same as the material of the frame 1. However, according to other embodiments of the invention, the material of the removable and/or exchangeable bottom 4 may be different from the material of the frame 1. The removable and/or exchangeable bottom is rigid, i.e. the removable and/or bottom is stiff, or in other words the bottom is substantially not flexible. The removable and/or exchangeable bottom 4 may be adapted for allowing inductive cooking. Alternatively, the material, e.g. at one side of the removable and/or exchangeable bottom, may be selected for heating using flames, such as e.g. using gas. The removable and/or exchangeable bottom 4 may have any suitable thickness such as, for example, a thickness of between 0.01 mm and 10 mm or a higher thickness.

According to embodiments of the invention the removable and/or exchangeable bottom 4 may be adapted to fit in the opening 3 in the base 2. For example the removable and/or exchangeable bottom 4 may comprise at least a portion having an outer edge that fits to an inner edge of the opening 3 in the base 2 or may overall have an outer edge that fits to an inner edge of the opening 3 in the base 2. Alternatively or in addition thereto, the removable and/or exchangeable bottom 4 may be adapted to fit to or onto the base 2. For example, the removable and/or exchangeable bottom 4 may comprise a portion that fits to the base 2 or may overall have a shape that fits to the base 2.

According to embodiments of the invention and as illustrated in Fig. 1 and Fig. 2, the removable and/or exchangeable bottom 4 may be in the form of a disc. The size of a portion of the disc 4 may be the same as an outer size of the base 2.

According to embodiments of the invention which are illustrated in Fig. 3 and Fig. 4, the removable and/or exchangeable bottom 4 may comprise a portion 5, e.g. a bulge, which fits the opening 3 of the base 2 of the frame 1 (see Fig. 2). Therefore, the size, e.g. diameter of the bulge 5 may be substantially equal to the size, e.g. diameter do of the opening 3.

It is an advantage of embodiments according to the present invention that a suitable cooking surface and/or bottom may be selected depending on the application or preference of the user. According to embodiments of the invention a same cooking utensil 10 may be used with different types of bottoms, e.g. a grill bottom or a flat bottom.

The base 2 and/or exchangeable bottom 4 may be adapted for being fixed to each other by means of a fixing means. Such fixing means may be any type of fixing means for fixing the bottom removably to the base, such as for example by screwing, clamping, clicking, clipping, using magnetic forces, using glue and dissolving product for dissolving the glue, etc. The fixing means may be an external component, separate from the frame 1 and the bottom 4, for removable fixing these components to each other. Alternatively it may be integrated to the frame 1 and/or to the bottom portion, so that it allows removable fixing of these components to each other. The fixing means may for example be a clamping means adapted for clamping both the removable and/or exchangeable bottom 4 and the frame 1 or a component thereof, e.g. the base 2, to each other. The fixing means may comprise a first portion on the removable and/or exchangeable bottom 4 and a second portion on the frame 1 whereby the first and second portion are adapted to co-operate so as to provide a removable fixation between the removable and/or exchangeable bottom 4 and the frame 1. In one example, the fixing means may comprise a portion of internal thread on a first component, and external thread on a second component so that these components, e.g. the base 2 and the bottom 4, can be screwed onto each other. According to another example, the fixing means may comprise clipping or clicking portions on one or both of the frame 1 and the bottom 4 so that the bottom 4 clips or clicks in the frame 1, or e.g. the base 2 thereof. In another example, one of the frame 1 or the bottom 4 may comprise a magnetising portion and the other material may be adapted to be magnetisable so that fixing may be performed by magnetic force. In another example, one part of a fixing means may be provided onto the base 2 and another part of the fixing means may be provided to the removable and/or exchangeable bottom 4. Both means then may work together to fix the base 2 and the exchangeable bottom 4 to each other, or in other words to fix the exchangeable bottom 4 to the frame 1 for forming the cooking utensil, e.g. pan 10.

According to the examples given, the removable and/or exchangeable bottom 4 may be fixed to frame 1 in a direction as indicated by arrow 6 in Fig. 2 and Fig. 4, i.e. from a lower outer side of the base 2 of the frame 1. In the case, an upper surface 7 of the removable and/or exchangeable bottom 4, e.g. of the disc (Fig. 1 and Fig. 2) or of the bulge 5 (Fig. 3 and Fig. 4) may form the cooking surface 7 of the cooking utensil, e.g. pan 10. However, according to other embodiments of the invention where the removable and/or exchangeable bottom 4 comprises a bulge 5, the removable and/or exchangeable bottom 4 may be provided and fixed to the base 2 of the frame 1 from the opposite side, i.e. from inside the frame 1, as illustrated in Fig. 6. In that case, a side 8 of the removable and/or exchangeable bottom 4 opposite to the bulge 5 may form the cooking surface 7 of the cooking utensil, e.g. pan 10.

Fixing the removable and/or exchangeable bottom 4 to the base 2 of the frame 1 according to embodiments of the invention may result in the removable and/or exchangeable bottom 4 being liquid tight, e.g. water, fat or food juice tight, and heat tight attached to the frame 1. Hence, juices originating from food that is being cooked in the cooking utensil, e.g. pan 10, or fat such as butter or oil that is used for cooking cannot leave the cooking utensil, e.g. pan 10, at places where the removable and/or exchangeable bottom 4 is fixed to the frame 2. Furthermore, fixing the removable and/or exchangeable bottom 4 to the base 2 of the frame 1 may result in a good heat transfer from the heat source to the cooking surface 7. In some embodiments according to the present invention, furthermore a sealing means may be provided for sealing the edge between the frame 1 and the bottom 4. Such a seal may be any type of sealing means such as for example a silicone or teflon sealing means

As known by a person skilled in the art the cooking utensil, e.g. pan 10, may be provided with a handle or grip 8 for handling the cooking utensil, e.g. pan 10.

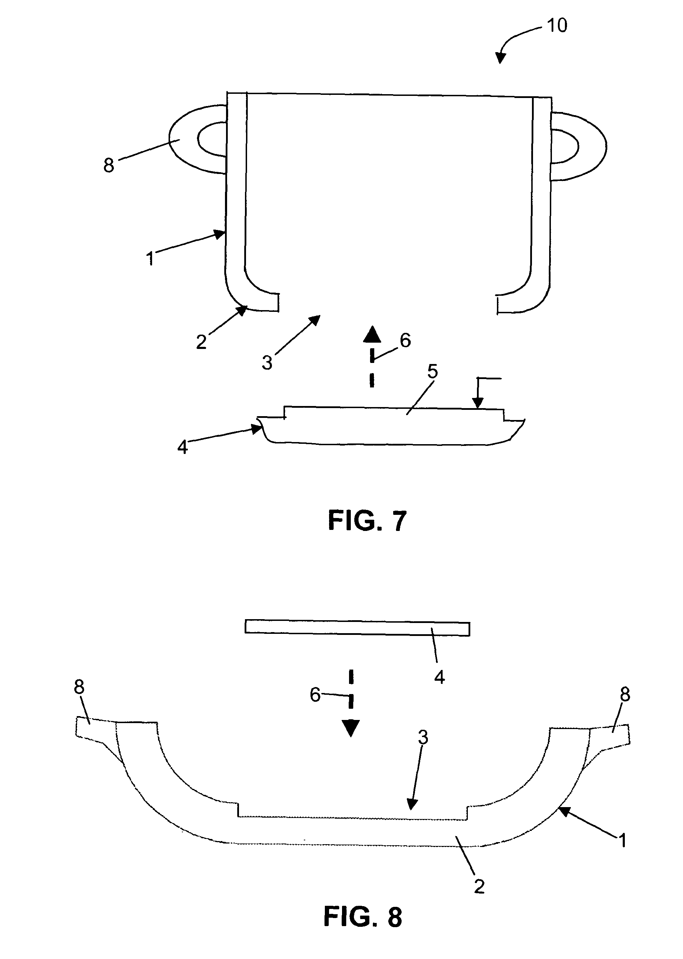

By way of example, Fig. 7 shows another kind of cooking utensil according to embodiments of the invention. In this example, the cooking utensil may be a cooking pot 10, such as a casserole or a pressure-cooker. The cooking pot 10 comprises, similar to the pan described in the above embodiment, a frame or body 1. The frame or body 1 of the cooking utensil, e.g. cooking pot 10, may be made out of any suitable material known by a person skilled in the art, such as for example but not limited to inox, aluminium, cast iron or copper. The frame or body 1 comprises a base 2 which comprises a recess 3, in the example given an opening 3, and which is adapted for being fixed to a removable and/or exchangeable bottom 4. The opening 3 in the base 2 and the removable and/or exchangeable bottom 4 may have a circular shape or an oval shape or may have any other shape suitable for a cooking utensil, in the example given suitable for a cooking pot 10. The opening 3 in the base 2 and the removable and/or exchangeable bottom 4 may have any suitable size depending on the kind and size of the cooking utensil, e.g. cooking pot 10.

The removable and/or exchangeable bottom 4 is adapted for closing the opening 3 in the base 2. According to embodiments of the invention, but not illustrated in the figures, the removable and/or exchangeable bottom 4 may be in the form of a disc. According to other embodiments of the invention, the removable and/or exchangeable bottom 4 may comprise a bulge 5 which fits the opening 3 of the base 2 of the frame 1, as illustrated in Fig. 7. In this case, the size, e.g. diameter of the bulge 5 may be substantially equal to the size, e.g. diameter do of the opening 3.

By way of another example, Fig. 8 illustrates a cooking utensil 10 in which the recess 3 does not extend all the way through the base 2. In other words, according to this example, the recess 3 only partly extends through the base 2. According to the present example, the recess 3 may also be referred to as cut-away. The cut-away 3 is adapted for receiving a removable and/or exchangeable bottom 4. The removable and/or exchangeable bottom 4 is adapted for closing the cut-away 3 in the base 2. According to the present embodiment, the cooking utensil 10 may comprise two handles 8, one at each side of the cooking utensil 10. This enables easy handling of the cooking utensil 10.

The base 2 and/or exchangeable bottom 4 may be adapted for being fixed to each other by means of a fixing means, as for example, the fixing means as described above.

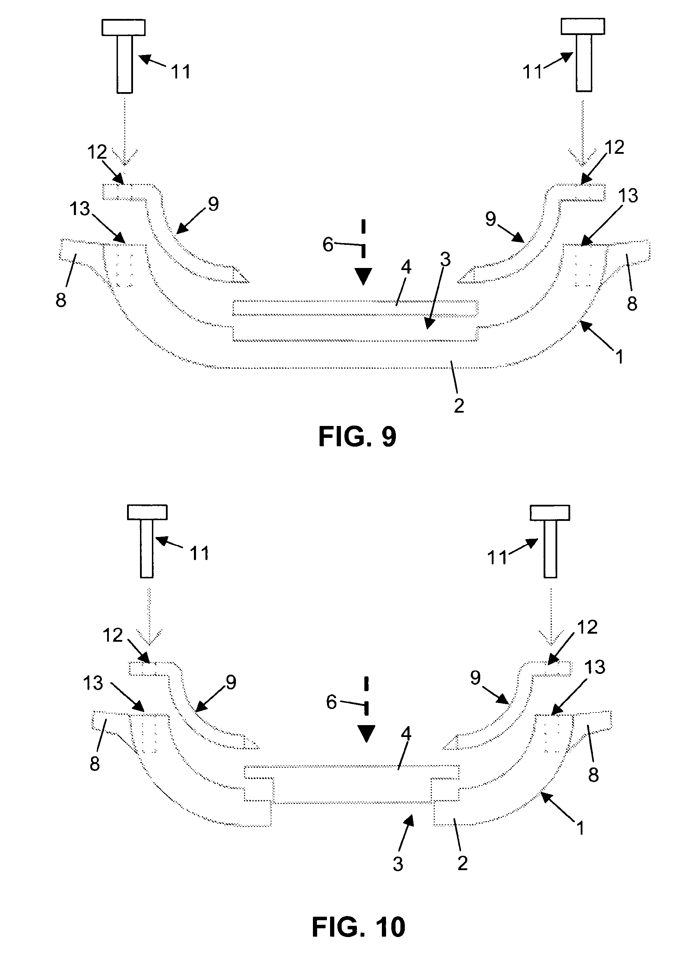

Fig. 9 and Fig. 10 show an example of a fixing means according to an embodiment of the present invention. According to this example, the fixing means may comprise a clipping means 9 which may be attached to the frame 1 of the cooking utensil 10 by means of a screw 11. The clipping means 9 may comprise a hole 12 which, when the clipping means 9 is provided to the frame 1 of the cooking utensil 10, fits a hole 13 present in the frame 1. The holes 12 and 13 are adapted for receiving the screw 11 so as to fix the clipping means 9 to the frame 1. According to the present embodiment, the removable and/or exchangeable bottom 4 may, after being provided in the recess 3, which may be a cut-away in the base 2 (see Fig. 9) or an opening in the base 2 (see Fig. 10), be fixed by providing the clipping means 9 and screwing it to the frame 1 by means of screws 11.

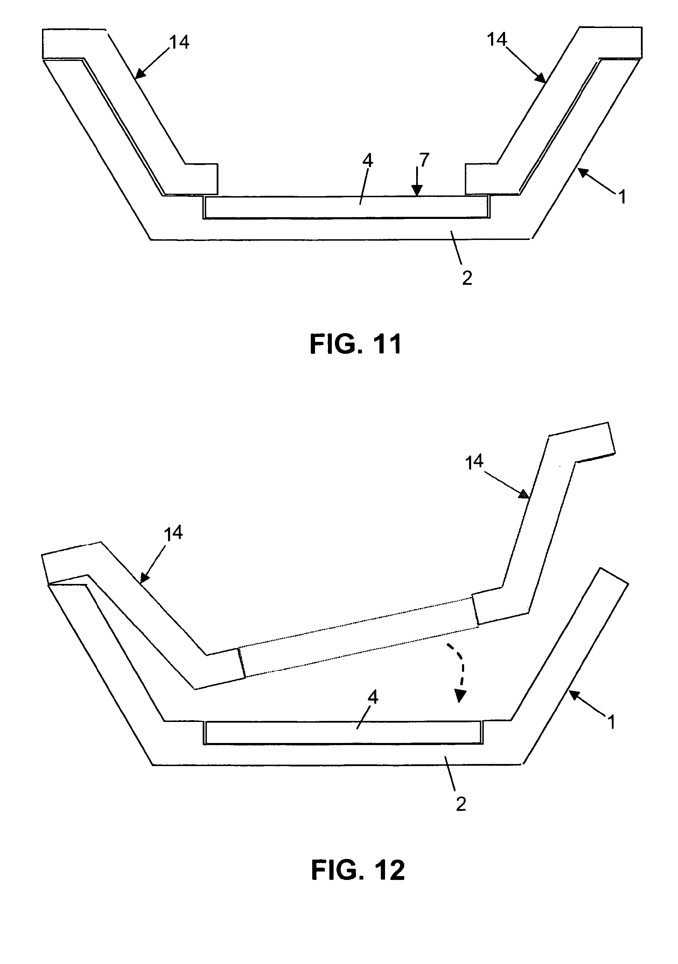

Another example of a fixing means is illustrated in Fig. 11 and Fig. 12. According to this example, the fixing means may be clamping means 14. The clamping means 14 may have a same shape as the frame 1 of the cooking utensil 10 and may comprise an opening which is slightly smaller than the size of the removable and/or exchangeable bottom 4, such that when clamped the cooking surface 7 of the removable and/or exchangeable bottom 4 is exposed. According to this embodiment, after provision of the removable and/or exchangeable bottom 4 to the recess 3 in the base 2, the clamping means 14 is provided as illustrated in Fig. 12. First the clamping means 14 is provided on one side of the removable and/or exchangeable bottom 4 and is then pushed down to be clamped such that the removable and/or exchangeable bottom 4 is fixed to the base 2.

Similar as described above in the embodiment with respect to the pan 10, the removable and/or exchangeable bottom 4 may be fixed to frame 1 from a lower outer side of the base 2 of the frame 1 for both the removable and/or exchangeable bottom 4 being formed of a disc or having a bulge 5. According to other embodiments, but only for the case where the removable and/or exchangeable bottom 4 has a bulge 4, the removable and/or exchangeable bottom 4 may be fixed to the base 2 of the frame 1 from the opposite side, i.e. from inside the frame 1.

Fixing the removable and/or exchangeable bottom 4 to the base 2 of the frame 1 according to embodiments of the invention may result in the removable and/or exchangeable bottom 4 being liquid, e.g. water, fat or food juice tight, and heat tight attached to the frame 1. Hence, juices originating from food that is being cooked in the cooking utensil, e.g. cooking pot 10, or fat such as butter or oil that is used for cooking cannot leave the cooking utensil, e.g. cooking pot 10, at places where the removable and/or exchangeable bottom 4 is fixed to the frame 2. Furthermore, fixing the removable and/or exchangeable bottom 4 to the base 2 of the frame 1 may result in a good heat transfer from the heat source to the cooking surface 7.

Other features as for example a sealing means, and one or more handles 8 also may be provided, similar as described above for the cooking pan 10.

An advantage of a cooking utensil, e.g. pan 10, according to embodiments of the invention is that, when the cooking surface 7 of the cooking utensil, e.g. pan 10 is damaged, e.g. scratched, the removable and/or exchangeable bottom 4 can be removed and replaced by a new removable and/or exchangeable bottom 4 with an undamaged cooking surface 7. This significantly decreases costs with respect to prior art cooking utensils where the complete cooking utensil has to be replaced when the cooking surface 7 is damaged, e.g. scratched.

Another advantage of a cooking utensil 10 according to embodiments of the invention is that in the same cooking utensil 10 different types of bottoms 4 can be used, e.g. a grill bottom or a flat bottom, depending on the application the cooking utensil 10 is intended for.

In some embodiments, the present invention is related to cooking utensils 10 as described above, wherein furthermore an anti-stick function is provided in the cooking utensil 10. A number of examples is given below.

According to embodiments of the present invention, a baking sheet may be provided onto the cooking surface 7 for preventing food from sticking to the cooking surface 7 of the cooking utensil, e.g. pan or cooking pot 10. This may be done before the removable and/or exchangeable bottom 4 is fixed to the base 2 and may be done such that after fixing the removable and/or exchangeable bottom 4 to the base 2, edges of the baking sheet are stuck in between the exchangeable bottom 4 and the base 2. The baking sheet may be made of any suitable heat resistant material known by a person skilled in the art such as, for example but not limited to, glassine paper, parchment paper, nitrate paper, aramid paper or the like. It may comprise an anti-stick coating may for example be a fluoropolymer, such as for example PTFE, commercially available for example as Teflon®. The cooking utensil may be adapted for fixing a baking sheet between to the bottom 4. In one embodiment, the fixing means of the cooking utensil may be adapted for fixing the backing sheet to the bottom, e.g. by clamping the baking sheet between the bottom 4 and the frame 1. An advantage of these embodiments of the invention is that the baking sheet is fixed and is prevented from moving during cooking which increases comfort of the cooking utensil, e.g. pan or cooking pot 10. A further advantage of using a baking sheet is that, because it is stuck between the removable and/or exchangeable bottom 4 and the base 2, it may also serve as closing or sealing means for preventing leakage of e.g. food juices or fat used during cooking. Still a further advantage is that, when the baking sheet is damaged, the removable and/or exchangeable bottom 4 may be removed and the baking sheet may be replaced by a new, non-damaged baking sheet, after which the removable and/or exchangeable bottom 4 can be again fixed to the base 2. This further significantly reduces costs with respect to prior art devices where the complete cooking utensil 10 has to be replaced when the cooking surface 7 is damaged.

According to further embodiments of the invention, an anti-stick coating (not shown in the figures) may be provided to the cooking surface 7 of the bottom 4, for reducing sticking or preventing sticking of food to the bottom 4. In one example, an anti sticking coating may be provided onto the upper surface 7 of a bulge 5 in the bottom. The bulge 5 thereby forms the cooking surface 7 of the cooking utensil, e.g. pan or cooking pot 10. This anti-stick coating may be for preventing food that is being cooked in the cooking utensil, e.g. pan or cooking pot 10 from sticking to the cooking surface 7 of the cooking utensil, e.g. pan or cooking pot 10. The anti-stick coating may, for example, be a PTFE (=polytetrafluoroethylene) coating, also known as Teflon^{®} coating or may be any other suitable anti-stick coating known by a person skilled in the art. The anti-stick coating may be provided in any suitable way known by a person skilled in the art. For example, the anti-stick coating may be provided to the cooking surface 7 of the cooking utensil, e.g. pan or cooking pot 10 by spraying the anti-stick material onto the cooking surface 7, by powder coating, etc. An advantage of the cooking utensil, e.g. or cooking pot pan 10, according to these embodiments is that, when the anti-stick coating is damaged, the removable and/or exchangeable bottom 4 may be removed from the cooking utensil, e.g. pan or cooking pot 10 and may replaced by a new removable and/or exchangeable bottom 4 with an undamaged anti-stick coating. This significantly reduces costs when compared to prior art cooking utensils, where the complete cooking utensil 10 has to be replaced when the anti-stick coating on the cooking surface 7 is damaged.

According to embodiments of the invention, an anti-stick coating may also be provided to the frame 1 of the cooking utensil, e.g. pan or cooking pot 10. In that way, food that is being cooked in the cooking utensil, e.g. pan or cooking pot 10, may be prevented from sticking to an inner side of the frame 1 of the cooking utensil, e.g. pan or cooking pot 10. According to specific embodiments of the invention, the anti-stick coating provided to the inner side of the frame 1 may be of a same material than the anti-stick coating on the removable and/or exchangeable bottom 4. However, according to other embodiments of the invention, the anti-stick coating provided to the inner side of the frame 1 may be of a different material than the anti-stick coating on the removable and/or exchangeable bottom 4. According to further embodiments of the invention, an anti-stick coating may furthermore be provided to an outer side of the frame 1. Such a coating on a surface of the frame will suffer less from damage, as it is not part of the cooking surface. Furthermore, provision of such a coating may provide the advantage of easy cleaning.

In a second aspect, the present invention also provides a removable and/or exchangeable bottom 4 for a cooking utensil, e.g. pan or cooking pot 10, the cooking utensil, e.g. pan or cooking pot 10, comprising a frame 1 having a base 2 with a recess 3, as described in the embodiments above. The exchangeable bottom 4 is adapted for being removably fixed to the base 2 of the frame 1 thereby closing the recess 3 in the base 2. The removable and/or exchangeable bottom is rigid, i.e. the removable and/or bottom is stiff, or in other words the bottom is substantially not flexible. The frame forms an integral, uninterrupted rigid surround for the bottom, i.e. the frame does not include a hinge or interruption or split in one side, e.g. is made of metal at least in part.

Removably fixing the removable and/or exchangeable bottom 4 to the base 2 of the frame 1 may be done by means of a fixing means. Such fixing means may be any type of fixing means for fixing the bottom removably to the base, such as for example by screwing, clamping, clicking, clipping, using magnetic forces, using glue and dissolving product for dissolving the glue, etc. The fixing means may be an external component, separate from the frame 1 and the bottom 4, for removable fixing these components to each other. Alternatively it may be integrated to the frame 1 and/or to the bottom portion, so that it allows removable fixing of these components to each other. The fixing means may for example be a clamping means adapted for clamping both the removable and/or exchangeable bottom 4 and the frame 1 or a component thereof, e.g. the base 2, to each other. The fixing means may comprise a first portion on the removable and/or exchangeable bottom 4 and a second portion on the frame 1 whereby the first and second portion are adapted to co-operate so as to provide a removable fixation between the removable and/or exchangeable bottom 4 and the frame 1. In one example, the fixing means may comprise a portion of internal thread on a first component, and external thread on a second component so that these components, e.g. the base 2 and the bottom 4, can be screwed onto each other. According to another example, the fixing means may comprise clipping or clicking portions on one or both of the frame 1 and the bottom 4 so that the bottom 4 clips or clicks in the frame 1, or e.g. the base 2 thereof. In another example, one of the frame 1 or the bottom 4 may comprise a magnetising portion and the other material may be adapted to be magnetisable so that fixing may be performed by magnetic force. In another example, one part of a fixing means may be provided onto the base 2 and another part of the fixing means may be provided to the removable and/or exchangeable bottom 4. Both means then may work together to fix the base 2 and the exchangeable bottom 4 to each other, or in other words to fix the exchangeable bottom 4 to the frame 1 for forming the cooking utensil, e.g. pan 10.

In a further aspect, the present invention also provides a method for manufacturing a cooking utensil, e.g. pan or cooking pot 10. The method comprises providing a frame 1 having a base 2 with a recess 3, e.g. a cut-away or an opening, providing a removable and/or exchangeable bottom 4 adapted for closing the recess 3 in the base 2, the removable and/or exchangeable bottom 4 being rigid, and removably fixing the removable and/or exchangeable bottom 4 to the frame 1 by means of fixing means. The frame forms an integral, uninterrupted rigid surround for the bottom, i.e. the frame does not include a hinge or interruption or split in one side. Removably fixing the removable and/or exchangeable bottom 4 to the frame 1 may be performed by clamping, clicking, clipping, screwing, glueing, using magnetic forces, as was described above. According to embodiments of the invention, providing a removable and/or exchangeable bottom 4 may comprise providing a removable and/or exchangeable bottom 4 having the form of a disc, as was illustrated in Fig. 1 and Fig. 2. According to other embodiments of the invention, providing a removable and/or exchangeable bottom 4 may comprise providing a removable and/or exchangeable bottom 4 having a bulge 5 which fits the recess 3 in the base 2, as was illustrated in Fig. 3 and Fig. 4.

It is to be understood that although preferred embodiments, specific constructions and configurations, as well as materials, have been discussed herein for devices according to the present invention, various changes or modifications in form and detail may be made without departing from the scope of this invention as defined by the appended claims

## Claims

1. A cooking utensil (10) comprising:
- a frame (1) having a base (2) with a recess (3) receiving a removable and/or exchangeable bottom (4) adapted for closing the recess (3) in the base (2), the removable and/or exchangeable bottom (4) having a cooking surface (7), and
- fixing means for removably fixing the removable and/or exchangeable
bottom (4) to the base (2) of the frame (1), **characterised by**:
a baking sheet having edges stuck in between the base (2) of the frame (1) and the removable and/or exchangeable bottom (4), the baking sheet thereby covering the cooking surface (7) of the removable and/or exchangeable bottom (4).

2. A cooking utensil (10) according to claim 1, wherein the fixing means comprises a clamping means for clamping the frame (1) to the removable and/or exchangeable bottom (4).

3. A cooking utensil (10) according to claim 1, wherein the fixing means comprises a first portion on the frame (1), wherein the first portion is adapted for co-operating with a second portion on the removable and/or exchangeable bottom (4) so as to provide a removable fixation between the removable and/or exchangeable bottom (4) and the frame (1).

4. A cooking utensil (10) according to any of the previous claims, the removable and/or exchangeable bottom (4) having a cooking surface (7), wherein the cooking surface (7) of the removable and/or exchangeable bottom (4) comprises an anti-stick coating.

5. Use of a cooking utensil (10) according to any of the previous claims for cooking food.

6. Method for manufacturing a cooking utensil (10), the method comprising:
- providing a frame (1) having a base (2) with a recess (3),
- providing a removable and/or exchangeable bottom (4) adapted for closing the recess (3) in the base (2), and
- removably fixing the removable and/or exchangeable bottom (4) to the frame (1) by means of fixing means, **characterised by**:
fixing a baking sheet having edges stuck in between the base (2) of the frame (1) and the removable and/or exchangeable bottom (4), the baking sheet thereby covering the cooking surface (7) of the removable and/or exchangeable bottom (4).

7. Method according to claim 6, wherein removably fixing the removable and/or exchangeable bottom comprises fitting a portion of the removable and/or exchangeable bottom (4) in the recess (3) of the base (2).

8. Method according to claim 6 or 7, the removable and/or exchangeable bottom (4) having a cooking surface (7), wherein the method furthermore comprises, before providing the removable and/or exchangeable bottom (4), providing an anti-stick coating to the cooking surface (7) of the removable and/or exchangeable bottom (4).

9. Method according to any of claims 6 to 8, the removable and/or exchangeable bottom (4) having a cooking surface (7), wherein the method furthermore comprises fixing a baking sheet in between the base (2) of the frame (1) and the removable and/or exchangeable bottom (4), the baking sheet thereby covering the cooking surface (7) of the removable and/or exchangeable bottom (4).

## Patentansprüche

1. Kochgerät (10), umfassend:
- einen Rahmen (1) mit einer Basis (2) mit einer Ausnehmung (3), die einen entfernbaren und/oder austauschbaren Boden (4) aufnimmt, der zum Schließen der Ausnehmung (3) in der Basis (2) ausgebildet ist, wobei der entfernbare und/oder austauschbare Boden (4) eine Kochfläche (7) hat, und
- ein Befestigungsmittel zum lösbaren befestigen des entfernbaren und/oder austauschbaren Bodens (4) an der Basis (2) des Rahmens (1), **gekennzeichnet durch**:
ein Backblech mit Rändern, die zwischen der Basis (2) des Rahmens (1) und dem entfernbaren und/oder austauschbaren Boden (4) eingesetzt sind, wodurch das Backblech die Kochfläche (7) des entfernbaren und/oder austauschbaren Bodens (4) bedeckt.

2. Kochgerät (10) nach Anspruch 1, wobei das Befestigungsmittel ein Klemmenmittel zum Festklemmen des Rahmens (1) an dem entfernbaren und/oder austauschbaren Boden (4) umfasst.

3. Kochgerät (10) nach Anspruch 1, wobei das Befestigungsmittel einen ersten Abschnitt an dem Rahmen (1) umfasst, wobei der erste Abschnitt zum Zusammenwirken mit einem zweiten Abschnitt des entfernbaren und/oder austauschbaren Bodens (4) ausgebildet ist, so dass eine lösbare Befestigung zwischen dem entfernbaren und/oder austauschbaren Boden (4) und dem Rahmen (1) bereitgestellt wird.

4. Kochgerät (10) nach einem der vorangehenden Ansprüche, wobei der entfernbare und/oder austauschbare Boden (4) eine Kochfläche (7) aufweist, wobei die Kochfläche (7) des entfernbaren und/oder austauschbaren Bodens (4) eine Antihaftbeschichtung umfasst.

5. Verwendung eines Kochgeräts (10) nach einem der vorangehenden Ansprüche zum Kochen von Nahrungsmitteln.

6. Verfahren zum Herstellen eines Kochgeräts (10), wobei das Verfahren Folgendes umfasst:
- Bereitstellen eines Rahmens (1) mit einer Basis (2) mit einer Ausnehmung (3),
- Bereitstellen eines entfernbaren und/oder austauschbaren Bodens (4), der zum Schließen der Ausnehmung (3) in der Basis (2) ausgebildet ist,
- lösbares Befestigen des entfernbaren und/oder austauschbaren Bodens (4) an dem Rahmen (1) durch ein Befestigungsmittel, **gekennzeichnet durch**:
Befestigen eines Backblechs mit Rändern, die zwischen der Basis (2) des Rahmens (1) und dem entfernbaren und/oder austauschbaren Boden (4) eingesetzt sind, wodurch das Backblech die Kochfläche (7) des entfernbaren und/oder austauschbaren Bodens (4) bedeckt.

7. Verfahren nach Anspruch 6, wobei das lösbare Befestigen des entfernbaren und/oder austauschbaren Bodens (4) das Befestigen eines Abschnitts des entfernbaren und/oder austauschbaren Bodens (4) in der Ausnehmung (3) der Basis (2) umfasst.

8. Verfahren nach Anspruch 6 oder 7, wobei der entfernbare und/oder austauschbare Boden (4) eine Lochfläche (7) umfasst, wobei das Verfahren des Weiteren vor dem Bereitstellen des entfernbaren und/oder austauschbaren Bodens (4) das Bereitstellen einer Antihaftbeschichtung auf der Kochfläche (7) des entfernbaren und/oder austauschbaren Bodens (4) umfasst.

9. Verfahren nach einem der Ansprüche 6 bis 8, wobei der entfernbare und/oder austauschbare Boden (4) eine Kochfläche (7) aufweist, wobei das Verfahren des Weiteren das Befestigen eines Backblechs zwischen der Basis (2) des Rahmens (1) und dem entfernbaren und/oder austauschbaren Boden (4) umfasst, wodurch das Backblech die Kochfläche (7) des entfernbaren und/oder austauschbaren Bodens (4) bedeckt.

## Revendications

1. Ustensile de cuisine (10) comprenant :
- une paroi (1) ayant une base (2) avec un creux (3) recevant un fond amovible et/ou échangeable (4) conçu pour fermer le creux (3) dans la base (2), le fond amovible et/ou échangeable (4) ayant une surface de cuisson (7), et
- un moyen de fixation pour fixer de façon amovible le fond amovible et/ou échangeable (4) à la base (2) de la paroi (1), **caractérisé par** :
une plaque de cuisson ayant des bords collés entre la base (2) de la paroi (1) et le fond amovible et/ou échangeable (4), la plaque de cuisson couvrant de ce fait la surface de cuisson (7) du fond amovible et/ou échangeable (4).

2. Ustensile de cuisine (10) selon la revendication 1, dans lequel le moyen de fixation comprend un moyen de serrage pour serrer la paroi (1) au fond amovible et/ou échangeable (4).

3. Ustensile de cuisine (10) selon la revendication 1, dans lequel le moyen de fixation comprend une première partie sur la paroi (1), dans laquelle la première partie est conçue pour coopérer avec une seconde partie sur le fond amovible et/ou échangeable (4) de façon à fournir une fixation amovible entre le fond amovible et/ou échangeable (4) et la paroi (1).

4. Ustensile de cuisine (10) selon l'une quelconque des revendications précédentes, le fond amovible et/ou échangeable (4) ayant une surface de cuisson (7), dans lequel la surface de cuisson (7) du fond amovible et/ou échangeable (4) comprend un revêtement antiadhésif.

5. Utilisation d'un ustensile de cuisine (10) selon l'une quelconque des revendications précédentes pour faire cuire de la nourriture.

6. Procédé pour fabriquer un ustensile de cuisine (10), le procédé comprenant :
- la fourniture d'une paroi (1) ayant une base (2) avec un creux (3),
- la fourniture d'un fond amovible et/ou échangeable (4) conçu pour fermer le creux (3) dans la base (2), et
- la fixation de façon amovible du fond amovible et/ou échangeable (4) à la paroi (1) à l'aide d'un moyen de fixation, **caractérisé par** :
la fixation d'une plaque de cuisson ayant des bords collés entre la base (2) de la paroi (1) et le fond amovible et/ou échangeable (4), la plaque de cuisson couvrant de ce fait la surface de cuisson (7) du fond amovible et/ou échangeable (4).

7. Procédé selon la revendication 6, dans lequel la fixation de façon amovible du fond amovible et/ou échangeable comprend l'adaptation d'une partie du fond amovible et/ou échangeable (4) dans le creux (3) de la base (2).

8. Procédé selon la revendication 6 ou 7, le fond amovible et/ou échangeable (4) ayant une surface de cuisson (7), dans lequel le procédé comprend en outre, avant la fourniture du fond amovible et/ou échangeable (4), la fourniture d'un revêtement antiadhésif à la surface de cuisson (7) du fond amovible et/ou échangeable (4).

9. Procédé selon l'une quelconque des revendications 6 à 8, le fond amovible et/ou échangeable (4) ayant une surface de cuisson (7), dans lequel le procédé comprend en outre la fixation d'une plaque de cuisson entre la base (2) de la paroi (1) et le fond amovible et/ou échangeable (4), la plaque de cuisson couvrant de ce fait la surface de cuisson (7) du fond amovible et/ou échangeable (4).
